# EUROPEAN PATENT SPECIFICATION

(11) **EP 3 480 533 B1**
(45) Date of publication and mention of the grant of the patent: **20.04.2022**
(21) Application number: 17820053.1
(22) Date of filing: 23.06.2017
(51) Int. Cl.: F25B 47/02, F25B 1/00, F25B 5/02, F25B 13/00, F25B 41/00, F25B 49/02

(54) **REFRIGERATION DEVICE**
KÜHLVORRICHTUNG
DISPOSITIF DE RÉFRIGÉRATION

(30) Priority: 30.06.2016 JP 2016130541
(43) Date of publication of application: 08.05.2019
(73) Proprietor: Daikin Industries, Ltd., Osaka-shi, Osaka 530-8323 (JP)
(72) Inventor: KITAO Takuya, Osaka-shi Osaka 530-8323 (JP); UENO Akitoshi, Osaka-shi Osaka 530-8323 (JP)
(74) Representative: Hoffmann Eitle
(86) International application number: PCT/JP2017/023225
(87) International publication number: WO 2018/003696

(56) References cited:
- EP-A1- 1 729 075
- JP-A- H07 243 726
- JP-A- 2006 098 045
- JP-A- 2009 228 975
- JP-A- 2009 287 800
- JP-U- S59 115 270
- US-A1- 2006 107 671

## Description

### TECHNICAL FIELD

The present invention relates to a refrigeration apparatus.

### BACKGROUND ART

A refrigeration apparatus using a refrigeration cycle has been known in the art. Such a refrigeration apparatus has been widely used to cool the interior of a refrigerator and a freezer, and condition inside air. For example, Patent Document 1 discloses a refrigeration apparatus connecting an outdoor unit and an indoor unit together via a liquid interconnecting pipe and a gas interconnecting pipe. The outdoor unit is provided with a compressor and a heat-source-side heat exchanger, and the indoor unit is provided with a utilization-side heat exchanger and a utilization-side expansion valve. These components are connected together to form a refrigerant circuit. The refrigeration apparatus of Patent Document 1 performs a cooling operation and a defrosting operation. In the cooling operation, the opening of the utilization-side expansion valve is regulated, and a refrigerant that has flowed out of the heat-source-side heat exchanger is decompressed through the utilization-side expansion valve. Then, the refrigerant absorbs heat from inside air in the utilization-side heat exchanger to evaporate. The inside air is cooled in this manner. In the defrosting operation, the utilization-side expansion valve is fully opened, and a refrigerant discharged from the compressor passes through the fully-open utilization-side expansion valve. Then, the refrigerant dissipates heat in the utilization-side heat exchanger to condense. The utilization-side heat exchanger is defrosted in this manner. The utilization-side expansion valve is configured as an electronic expansion valve, and its opening is regulated by a controller.

EP 1 729 075 A1 relates to a freezing apparatus. A refrigerator circuit and a freezing circuit are connected to an outdoor circuit in parallel in a refrigerant circuit, and a freezer circuit and a booster circuit are connected in series in the freezing circuit. The booster circuit includes a booster compressor and three-way switching mechanisms. During cooling operation of a freezing heat exchanger, first operation is performed in the three-way switching mechanisms so that the refrigerant evaporated in the freezing heat exchanger is compressed in the booster compressor and is sucked into a variable capacity compressor. During defrosting of the freezing heat exchanger, second operation is performed in the three-way switching mechanisms so that the refrigerant evaporated in the refrigeration heat exchanger is compressed in the booster compressor, is supplied to the freezing heat exchanger, and then, is sent back to the refrigeration heat exchanger.

### CITATION LIST

### PATENT DOCUMENT

[Patent Document 1] Japanese Unexamined Patent Publication No. 2009-287800

### SUMMARY OF THE INVENTION

### TECHNICAL PROBLEM

The utilization-side expansion valve of the refrigeration apparatus of Patent Document 1 can be configured as a temperature sensitive expansion valve (thermostatic expansion valve) having a temperature sensitive cylinder. However, if the utilization-side expansion valve is configured as the temperature sensitive expansion valve, the opening of the utilization-side expansion valve changes depending on the temperature of the temperature sensitive cylinder, and cannot be optionally regulated. As a result, the refrigerant is not allowed to optionally flow between the liquid interconnecting pipe and the utilization-side heat exchanger in the utilization-side unit (indoor unit). For example, in the defrosting operation, a passage of the refrigerant from the gas interconnecting pipe to the liquid interconnecting pipe via the utilization-side heat exchanger cannot be ensured, which makes it impossible to defrost the utilization-side heat exchanger using the refrigerant supplied from the gas interconnecting pipe (high-pressure and high-temperature refrigerant).

In view of the foregoing background, the present invention is intended to provide a refrigeration apparatus which allows a refrigerant to optionally flow between a liquid interconnecting pipe and a utilization-side heat exchanger in a utilization-side unit having a utilization-side expansion valve which is temperature sensitive.

### SOLUTION TO THE PROBLEM

A first aspect of the present invention is directed to a refrigeration apparatus including: a heat-source-side unit (11) including a heat-source-side heat exchanger (23); and a plurality of utilization-side units (12) each including a utilization-side heat exchanger (51) and an expansion valve circuit portion (52), the utilization-side units (12) being connected in parallel with the heat-source-side unit (11) through a liquid interconnecting pipe (13) and a gas interconnecting pipe (14) to form a refrigerant circuit (15) circulating a refrigerant therethrough, and a controller. The expansion valve circuit portion (52) includes: a temperature sensitive utilization-side expansion valve (53); a main pipe (60) allowing the refrigerant to flow between the utilization-side heat exchanger (51) and the liquid interconnecting pipe (13) via the utilization-side expansion valve (53); a bypass pipe (70) allowing the refrigerant to bypass the main pipe (60) and flow between the utilization-side heat exchanger (51) and the liquid interconnecting pipe (13); and a switching mechanism (54) switching each of the main pipe (60) and the bypass pipe (70) between an open state and a closed state.

According to the first aspect, opening the main pipe (60) allows a refrigerant to flow between the liquid interconnecting pipe (13) and the utilization-side heat exchanger (51) via the temperature sensitive utilization-side expansion valve (53). Further, opening the bypass pipe (70) allows the refrigerant to bypass the temperature sensitive utilization-side expansion valve (53) and flow between the liquid interconnecting pipe (13) and the utilization-side heat exchanger (51). In other words, even if the refrigerant is not allowed to flow through the utilization-side expansion valve (53), the bypass pipe (70) is opened to allow the refrigerant to flow between the liquid interconnecting pipe (13) and the utilization-side heat exchanger (51).

Further, in the first aspect, the controller (80) controls the switching mechanism (54) such that, if a defrosting operation in which the refrigerant circulates through the refrigerant circuit (15) to cause the utilization-side heat exchangers (51) of the utilization-side units (12) to function as condensers and cause the heat-source-side heat exchanger (23) to function as an evaporator is started, the main pipe (60) is closed, and the bypass pipe (70) is opened in each of the plurality of utilization-side units (12).

In the first aspect, when the defrosting operation is started, the bypass pipe (70) is opened to ensure a passage of the refrigerant from the gas interconnecting pipe (14) to the liquid interconnecting pipe (13) via the utilization-side heat exchanger (51) and the bypass pipe (70) in this order. Thus, the refrigerant (high-temperature and high-pressure refrigerant) can be supplied through the gas interconnecting pipe (14) into each of the utilization-side heat exchangers (51).

Still further, in the first aspect, the controller (80) controls the switching mechanism (54) such that, if the defrosting operation is started and the utilization-side heat exchanger (51) of any one of the utilization-side units (12) is completely defrosted, the bypass pipe (70) of the utilization-side unit (12) having the defrosted utilization-side heat exchanger (51) switches from an open state to a closed state.

In the first aspect, the supply of the refrigerant from the gas interconnecting pipe (14) to the utilization-side heat exchanger (51) in the one of the utilization-side units (12) including the utilization-side heat exchanger (51) that has been defrosted can be blocked. This can accelerate the supply of the refrigerant (high-temperature and high-pressure refrigerant) from the gas interconnecting pipe (14) to the utilization-side heat exchanger (51) in the other utilization-side unit(s) (12) having the utilization-side heat exchanger (51) that has not been completely defrosted yet.

A second aspect of the present invention is an embodiment of the first aspect. In the second aspect, the switching mechanism (54) includes a bypass on-off valve (71) switchable between an open state and a closed state, the bypass on-off valve (71) being provided for the bypass pipe (70).

In the second aspect, the bypass on-off valve (71) can be opened to open the bypass pipe (70), and can be closed to close the bypass pipe (70).

A third aspect of the present invention is an embodiment of the second aspect. In the third aspect, the switching mechanism (54) further includes a bypass check valve (72) provided for the bypass pipe (70), the bypass check valve (72) allowing the refrigerant to flow only from the utilization-side heat exchanger (51) to the liquid interconnecting pipe (13).

In the third aspect, the flow of the refrigerant from the liquid interconnecting pipe (13) to the utilization-side heat exchanger (51) in the bypass pipe (70) can be blocked. This can prevent the refrigerant from leaking through the bypass pipe (70) (i.e., the refrigerant from flowing from the liquid interconnecting pipe (13) through the bypass pipe (70) into the utilization-side heat exchanger (51)) if the refrigerant is passed from the liquid interconnecting pipe (13) through the open main pipe (60) into the utilization-side heat exchanger (51).

A fourth aspect of the present invention is an embodiment of any one of the first to third aspects. In the fourth aspect, the switching mechanism (54) includes a utilization-side on-off valve (61) switchable between an open state and a closed state, the utilization-side on-off valve (61) being provided for the main pipe (60).

In the fourth aspect, the utilization-side on-off valve (61) can be opened to open the main pipe (60), and can be closed to close the main pipe (60).

A fifth aspect of the present invention is an embodiment of the fourth aspect. In the fifth aspect, the switching mechanism (54) includes a utilization-side check valve (62) provided for the main pipe (60), the utilization-side check valve (62) allowing the refrigerant to flow only from the liquid interconnecting pipe (13) to the utilization-side heat exchanger (51).

In the fifth aspect, the flow of the refrigerant from the utilization-side heat exchanger (51) to the liquid interconnecting pipe (13) in the main pipe (60) can be blocked. This can prevent the refrigerant from leaking through the main pipe (60) (i.e., the refrigerant from flowing from the utilization-side heat exchanger (51) through the main pipe (60) into the liquid interconnecting pipe (13)) if the refrigerant is passed from the utilization-side heat exchanger (51) through the open bypass pipe (70) into the liquid interconnecting pipe (13).

A sixth aspect of the present invention is an embodiment of any one of the first to third aspects. In the sixth aspect, the utilization-side units (12) each include a utilization-side gas refrigerant pipe (57) through which a gas end of the utilization-side heat exchanger (51) is connected to the gas interconnecting pipe (14), the utilization-side expansion valve (53) includes a temperature sensitive cylinder (53a) attached to the utilization-side gas refrigerant pipe (57), and an equalizer (53b), and the switching mechanism (54) is switchable between a first connection state where the equalizer (53b) of the utilization-side expansion valve (53) is connected to an intermediate portion of the utilization-side gas refrigerant pipe (57) and a second connection state where the equalizer (53b) of the utilization-side expansion valve (53) is connected to an intermediate portion of the main pipe (60) between the utilization-side expansion valve (53) and the liquid interconnecting pipe (13).

In the sixth aspect, in a freezing operation in which the refrigerant is circulated such that the heat-source-side heat exchanger (23) functions as a condenser and the utilization-side heat exchanger (51) functions as an evaporator (i.e., if the refrigerant is passed from the liquid interconnecting pipe (13) through the utilization-side expansion valve (51) to the gas interconnecting pipe (14)), if the switching mechanism (54) is placed in the first connection state, the utilization-side expansion valve (53) can be opened to open the main pipe (60). If the switching mechanism (54) is placed in the second connection state, the utilization-side expansion valve (53) can be closed to close the main pipe (60).

A seventh aspect of the present invention is an embodiment of the sixth aspect. In the seventh aspect, the switching mechanism (54) includes a utilization-side check valve (62) provided for the main pipe (60), the utilization-side check valve (62) allowing the refrigerant to flow only from the liquid interconnecting pipe (13) to the utilization-side heat exchanger (51).

In the seventh aspect, the flow of the refrigerant from the utilization-side heat exchanger (51) to the liquid interconnecting pipe (13) in the main pipe (60) can be blocked. This can prevent the refrigerant from leaking through the main pipe (60) (i.e., the refrigerant from flowing from the utilization-side heat exchanger (51) through the main pipe (60) into the liquid interconnecting pipe (13)) if the refrigerant is passed from the utilization-side heat exchanger (51) through the open bypass pipe (70) into the liquid interconnecting pipe (13).

An eighth aspect of the present invention is an embodiment of the first aspect. In the eighth aspect, the controller (80) controls the switching mechanism (54) such that the bypass pipe (70) of one of the utilization-side units (12) having the utilization-side heat exchanger (51) that has not been completely defrosted yet is maintained in the open state, and such that the bypass pipe (70) of the other utilization-side unit(s) having the defrosted utilization-side heat exchanger (51) is intermittently opened.

In the eighth aspect, in the utilization-side unit (12) having the defrosted utilization-side heat exchanger (51), if the bypass pipe (70) is intermittently opened, the refrigerant in the utilization-side heat exchanger (51) is intermittently released through the bypass pipe (70) to the liquid interconnecting pipe (13) in the utilization-side unit (12) having the defrosted utilization-side heat exchanger (51).

### ADVANTAGES OF THE INVENTION

According to the first aspect of the invention, even if the refrigerant is not allowed to flow through the utilization-side expansion valve (53), the bypass pipe (70) is opened to allow the refrigerant to flow between the liquid interconnecting pipe (13) and the utilization-side heat exchanger (51). This allows the refrigerant to optionally flow between the liquid interconnecting pipe (13) and the utilization-side heat exchanger (51) in the utilization-side unit (12).

Further, according to the first aspect of the invention, during the defrosting operation, the refrigerant (high-temperature and high-pressure refrigerant) can be supplied through the gas interconnecting pipe (14) into the utilization-side heat exchanger (51). This allows the utilization-side heat exchanger (51) to be defrosted using the high-temperature and high-pressure refrigerant.

Still further, according to the first aspect of the invention, in the utilization-side unit (12) having the utilization-side heat exchanger (51) that has not been completely defrosted yet, the supply of the refrigerant (high-temperature and high-pressure refrigerant) from the gas interconnecting pipe (14) to the utilization-side heat exchanger (51) can be accelerated. This can accelerate defrosting of the utilization-side heat exchanger (51) in the utilization-side unit (12) having the utilization-side heat exchanger (51) that has not been completely defrosted yet.

According to the second aspect of the invention, the state of the bypass on-off valve (71) can be switched between the open state and the closed state to open and close the bypass pipe (70).

According to the third aspect of the invention, the refrigerant can be prevented from leaking through the bypass pipe (70) if the refrigerant is passed from the liquid interconnecting pipe (13) through the open main pipe (60) into the utilization-side heat exchanger (51). As a result, the flow rate of the refrigerant through the main pipe (60) can be maintained.

According to the fourth aspect of the invention, the state of the utilization-side on-off valve (61) can be switched between the open state and the closed state to open and close the main pipe (60).

According to the fifth aspect of the invention, the refrigerant can be prevented from leaking through the main pipe (60) if the refrigerant is passed from the utilization-side heat exchanger (51) through the open bypass pipe (70) into the liquid interconnecting pipe (13). As a result, the flow rate of the refrigerant through the bypass pipe (70) can be maintained.

According to the sixth aspect of the invention, the connection state of the switching mechanism (54) can be switched to open and close the main pipe (60).

According to the seventh aspect of the invention, the refrigerant can be prevented from leaking through the main pipe (60) if the refrigerant is passed from the utilization-side heat exchanger (51) through the open bypass pipe (70) into the liquid interconnecting pipe (13). As a result, the flow rate of the refrigerant through the bypass pipe (70) can be maintained.

According to the eighth aspect of the invention, in the utilization-side unit (12) having the defrosted utilization-side heat exchanger (51), the refrigerant in the utilization-side heat exchanger (51) can be intermittently released through the bypass pipe (70) to the liquid interconnecting pipe (13). This can prevent the refrigerant from accumulating in the utilization-side heat exchanger (51) of the utilization-side unit (12) having the defrosted utilization-side heat exchanger (51).

### BRIEF DESCRIPTION OF THE DRAWINGS

[FIG. 1] FIG. 1 is a piping system diagram showing an exemplary configuration for a refrigeration apparatus according to an embodiment.
[FIG. 2] FIG. 2 is a piping system diagram illustrating a cooling operation in the refrigeration apparatus of FIG. 1.
[FIG. 3] FIG. 3 is a piping system diagram illustrating a defrosting operation in the refrigeration apparatus of FIG. 1.
[FIG. 4] FIG. 4 is a piping system diagram showing a variation of a utilization-side unit.
[FIG. 5] FIG. 5 is a piping system diagram illustrating a cooling operation in a refrigeration apparatus including the utilization-side unit of FIG. 4.
[FIG. 6] FIG. 6 is a piping system diagram illustrating a defrosting operation in the refrigeration apparatus including the utilization-side unit of FIG. 4.

### DESCRIPTION OF EMBODIMENTS

Embodiments will be described in detail with reference to the drawings. Note that like reference characters designate identical or corresponding components in the drawings, and the description thereof may not be repeated.

### (Refrigeration Apparatus)

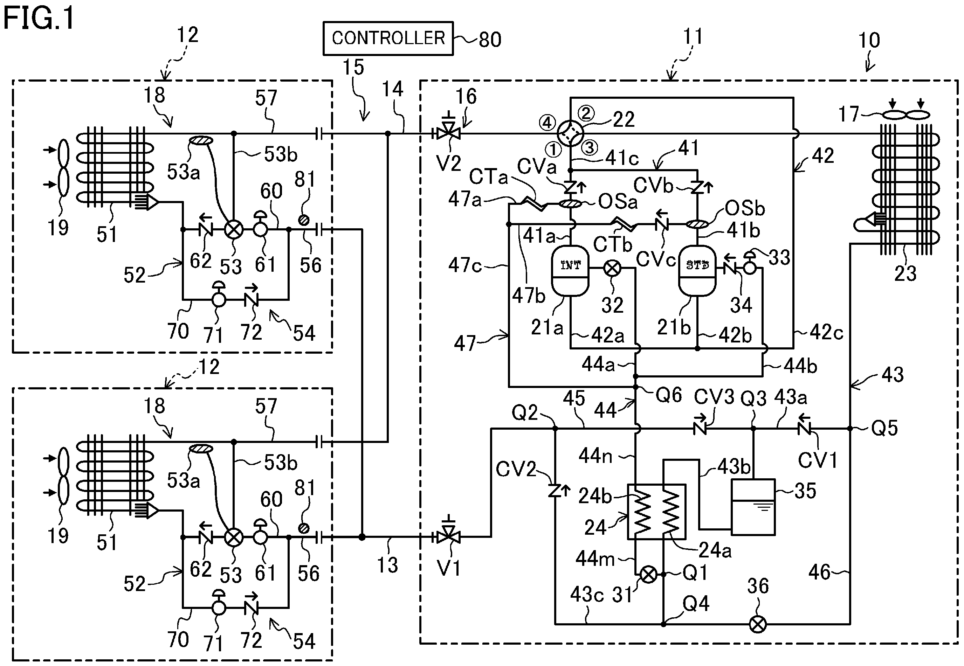

FIG. 1 shows an exemplary configuration for a refrigeration apparatus (10) according to an embodiment. The refrigeration apparatus (10) includes a heat-source-side unit (11) provided outside a device such as a refrigerator and a freezer, a plurality of (two in this example) utilization-side units (12) provided inside the device, and a controller (80). The heat-source-side unit (11) includes a heat-source-side circuit (16) and a heat-source-side fan (17). Each of the plurality of utilization-side units (12) includes a utilization-side circuit (18) and a utilization-side fan (19). In this refrigeration apparatus (10), the heat-source-side circuit (16) of the heat-source-side unit (11) and the utilization-side circuits (18) of the plurality of utilization-side units (12) are connected together through a liquid interconnecting pipe (13) and a gas interconnecting pipe (14) to form a refrigerant circuit (15) which circulates a refrigerant therethrough to perform a vapor compression refrigeration cycle. Specifically, a liquid stop valve (VI) and a gas stop valve (V2) are provided at liquid and gas ends of the heat-source-side circuit (16), respectively, and are connected to one end of the liquid interconnecting pipe (13) and one end of the gas interconnecting pipe (14), respectively. The liquid interconnecting pipe (13) and the gas interconnecting pipe (14) are connected to the liquid and gas ends of each of the utilization-side circuits (18), respectively. Specifically, each of the plurality of utilization-side units (12) is connected in parallel with the heat-source-side unit (11) via the liquid interconnecting pipe (13) and the gas interconnecting pipe (14) to form the refrigerant circuit (15) which circulates a refrigerant therethrough.

### <Heat-Source-Side Circuit>

The heat-source-side circuit (16) includes first and second compressors (21a, 21b), a four-way switching valve (22), a heat-source-side heat exchanger (23), a subcooling heat exchanger (24), a subcooling expansion valve (31), an intermediate expansion valve (32), an intermediate on-off valve (33), an intermediate check valve (34), a receiver (35), a heat-source-side expansion valve (36), first, second, and third check valves (CV1, CV2, CV3), first and second oil separators (OSa, OSb), first and second discharge check valves (CVa, CVb), first and second capillary tubes (CTa, CTb), and an oil return check valve (CVc).

The heat-source-side circuit (16) further includes a discharge refrigerant pipe (41), a suction refrigerant pipe (42), a heat-source-side liquid refrigerant pipe (43), an injection pipe (44), first and second connection pipes (45, 46), and an oil return pipe (47).

### «Compressors»

The first compressor (21a) is configured to compress, and discharge, a refrigerant sucked thereinto. The first compressor (21a) has a suction port, an intermediate port, and a discharge port. The suction port communicates with a compression chamber (i.e., a compression chamber in a low pressure phase) during a suction stroke of the first compressor (21a). The intermediate port communicates with a compression chamber (i.e., a compression chamber in an intermediate pressure phase) in the middle of a compression stroke of the first compressor (21a). The discharge port communicates with a compression chamber (i.e., a compression chamber in a high pressure phase) during a discharge stroke of the first compressor (21a). The first compressor (21a) is configured as, for example, a scroll compressor including a compression chamber defined between a fixed scroll and an orbiting scroll, which mesh with each other. The second compressor (21b) has a configuration similar to that for the first compressor (21a).

Note that the first compressor (21a) has a variable operation frequency (capacity). Specifically, changing the output frequency of an inverter (not shown) triggers a change in the rotational speed of an electric motor provided inside the first compressor (21a). This causes the operation frequency of the first compressor (21a) to vary. On the other hand, the second compressor (21b) has a fixed operation frequency (capacity). Specifically, the second compressor (21b) includes therein an electric motor rotating at a constant rotational speed, and has a constant operation frequency.

### «Four-Way Switching Valve»

The four-way switching valve (22) is switchable between a first state (indicated by the solid curves shown in FIG. 1) and a second state (indicated by the dashed curves shown in FIG. 1). In the first state, a first port communicates with a third port, and a second port communicates with a fourth port. In the second state, the first port communicates with the fourth port, and the second port communicates with the third port.

The first port of the four-way switching valve (22) is connected to the discharge ports of the first and second compressors (21a, 21b) through the discharge refrigerant pipe (41). The second port of the four-way switching valve (22) is connected to the suction ports of the first and second compressors (21a, 21b) through the suction refrigerant pipe (42). The third port of the four-way switching valve (22) is connected to the gas end of the heat-source-side heat exchanger (23). The fourth port of the four-way switching valve (22) is connected to the gas stop valve (V2).

### «Discharge Refrigerant Pipe»

The discharge refrigerant pipe (41) includes first and second discharge pipes (41a, 41b) each having one end connected to the discharge port of an associated one of the first and second compressors (21a, 21b), and a main discharge pipe (41c) connecting the other end of each of the first and second discharge pipes (41a, 41b) to the first port of the four-way switching valve (22).

### «Suction Refrigerant Pipe»

The suction refrigerant pipe (42) includes first and second suction pipes (42a, 42b) each having one end connected to the suction port of an associated one of the first and second compressors (21a, 21b), and a main suction pipe (42c) connecting the other end of each of the first and second suction pipes (42a, 42b) to the second port of the four-way switching valve (22).

### «Heat-Source-Side Heat Exchanger»

The heat-source-side heat exchanger (23) has its liquid end connected to one end of the heat-source-side liquid refrigerant pipe (43), and has its gas end connected to the third port of the four-way switching valve (22). The heat-source-side fan (17) is disposed near the heat-source-side heat exchanger (23). The heat-source-side heat exchanger (23) is configured to exchange heat between a refrigerant and heat-source-side air (i.e., outside air) transferred by the heat-source-side fan (17). The heat-source-side heat exchanger (23) is configured as, for example, a cross-fin, fin-and-tube heat exchanger.

### «Heat-Source-Side Liquid Refrigerant Pipe»

The heat-source-side liquid refrigerant pipe (43) has two ends respectively connected to the heat-source-side heat exchanger (23) and the liquid stop valve (VI). In this example, the heat-source-side liquid refrigerant pipe (43) includes a first heat-source-side liquid pipe (43a) connecting the liquid end of the heat-source-side heat exchanger (23) to the receiver (35), a second heat-source-side liquid pipe (43b) connecting the receiver (35) to the subcooling heat exchanger (24), and a third heat-source-side liquid pipe (43c) connecting the subcooling heat exchanger (24) to the liquid stop valve (VI).

### «Injection Pipe»

The injection pipe (44) connects a first intermediate portion (Q1) of the heat-source-side liquid refrigerant pipe (43) to the intermediate ports of the first and second compressors (21a, 21b). In this example, the injection pipe (44) includes a first main injection pipe (44m) connecting the first intermediate portion (Q1) of the heat-source-side liquid refrigerant pipe (43) to the subcooling heat exchanger (24), a second main injection pipe (44n) one end of which is connected to the subcooling heat exchanger (24), and first and second injection branch pipes (44a, 44b) each connecting the other end of the second main injection pipe (44n) to the intermediate port of an associated one of the first and second compressors (21a, 21b).

### «Subcooling Heat Exchanger»

The subcooling heat exchanger (24) is connected to the heat-source-side liquid refrigerant pipe (43) and the injection pipe (44), and is configured to exchange heat between a refrigerant flowing through the heat-source-side liquid refrigerant pipe (43) and a refrigerant flowing through the injection pipe (44). In this example, the subcooling heat exchanger (24) has first channels (24a) connected between the second heat-source-side liquid pipe (43b) and the third heat-source-side liquid pipe (43c), and second channels (24b) connected between the first main injection pipe (44m) and the second main injection pipe (44n), and is configured to exchange heat between a refrigerant flowing through the first channels (24a) and a refrigerant flowing through the second channels (24b). The subcooling heat exchanger (24) is configured as, for example, a plate heat exchanger.

### «Subcooling Expansion Valve»

The subcooling expansion valve (31) is provided on a portion of the injection pipe (44) between the first intermediate portion (Q1) of the heat-source-side liquid refrigerant pipe (43) and the subcooling heat exchanger (24) (in this example, on the first main injection pipe (44m)). The subcooling expansion valve (31) has an adjustable degree of opening. The subcooling expansion valve (31) is configured as, for example, an electronic expansion valve (motor-operated valve).

### «Intermediate Expansion Valve»

The intermediate expansion valve (32) is provided on a portion of the injection pipe (44) between the subcooling heat exchanger (24) and the intermediate port of the first compressor (21a) (in this example, on the first injection branch pipe (44a)). The intermediate expansion valve (32) also has an adjustable degree of opening. The intermediate expansion valve (32) is configured as, for example, an electronic expansion valve (a motor-operated valve).

### «Intermediate On-Off Valve and Intermediate Check Valve»

The intermediate on-off valve (33) and the intermediate check valve (34) are provided on a portion of the injection pipe (44) between the subcooling heat exchanger (24) and the intermediate port of the second compressor (21b) (in this example, on the second injection branch pipe (44b)). The intermediate on-off valve (33) and the intermediate check valve (34) are arranged on the second injection branch pipe (44b) in this order from the inlet toward the outlet of the second injection branch pipe (44b).

The intermediate on-off valve (33) is switchable between an open state and a closed state. The intermediate on-off valve (33) is configured as, for example, a solenoid valve. The intermediate check valve (34) allows a refrigerant to flow from the inlet toward the outlet of the second injection branch pipe (44b), but blocks a refrigerant from flowing in the reverse direction.

### <<Receiver>>

The receiver (35) is connected to a portion of the heat-source-side liquid refrigerant pipe (43) between the heat-source-side heat exchanger (23) and the subcooling heat exchanger (24), and is capable of temporarily storing a refrigerant condensed in the condenser (specifically, the heat-source-side heat exchanger (23) or a utilization-side heat exchanger (51), which will be described below). In this example, the receiver (35) has its inlet and outlet respectively connected to the first and second heat-source-side liquid pipes (43a, 43b).

### «First Connection Pipe»

The first connection pipe (45) connects second and third intermediate portions (Q2, Q3) of the heat-source-side liquid refrigerant pipe (43) together. The second intermediate portion (Q2) is a portion of the heat-source-side liquid refrigerant pipe (43) between the first intermediate portion (Q1) and the liquid stop valve (VI), and the third intermediate portion (Q3) is a portion of the heat-source-side liquid refrigerant pipe (43) between the liquid end of the heat-source-side heat exchanger (23) and the receiver (35).

### «Second Connection Pipe»

The second connection pipe (46) connects fourth and fifth intermediate portions (Q4, Q5) of the heat-source-side liquid refrigerant pipe (43) together. The fourth intermediate portion (Q4) is a portion of the heat-source-side liquid refrigerant pipe (43) between the first intermediate portion (Q1) and the second intermediate portion (Q2), and the fifth intermediate portion (Q5) is a portion of the heat-source-side liquid refrigerant pipe (43) between the liquid end of the heat-source-side heat exchanger (23) and the third intermediate portion (Q3).

### «Heat-Source-Side Expansion Valve»

The heat-source-side expansion valve (36) is provided for the second connection pipe (46). The heat-source-side expansion valve (36) has an adjustable degree of opening. The heat-source-side expansion valve (36) is configured as, for example, an electronic expansion valve (motor-operated valve).

### «First Check Valve»

The first check valve (CV1) is provided between the third and fifth intermediate portions (Q3, Q5) of the heat-source-side liquid refrigerant pipe (43), and is configured to allow a refrigerant to flow from the fifth intermediate portion (Q5) toward the third intermediate portion (Q3) and block a refrigerant from flowing in the reverse direction.

### «Second Check Valve»

The second check valve (CV2) is provided between the second and fourth intermediate portions (Q2, Q4) of the heat-source-side liquid refrigerant pipe (43), and is configured to allow a refrigerant to flow from the fourth intermediate portion (Q4) toward the second intermediate portion (Q2) and block a refrigerant from flowing in the reverse direction.

### «Third Check Valve»

The third check valve (CV3) is provided for the first connection pipe (45), and is configured to allow a refrigerant to flow from the second intermediate portion (Q2) to third intermediate portion (Q3) of the heat-source-side liquid refrigerant pipe (43) and block a refrigerant from flowing in the reverse direction.

### «First Oil Separator and First Discharge Check Valve»

The first oil separator (OSa) and the first discharge check valve (CVa) are provided on a portion of the discharge refrigerant pipe (41) between the first compressor (21a) and the first port of the four-way switching valve (22) (specifically, on the first discharge pipe (41a)). The first oil separator (OSa) and the first discharge check valve (CVa) are arranged on the first discharge pipe (41a) in this order from the inlet toward the outlet of the first discharge pipe (41a). The first oil separator (OSa) is capable of separating refrigerating machine oil from a refrigerant discharged from the first compressor (21a) and storing therein the refrigerating machine oil. The first discharge check valve (CVa) allows a refrigerant to flow from the inlet to the outlet of the first discharge pipe (41a), but blocks a refrigerant from flowing in the reverse direction.

### «Second Oil Separator and Second Discharge Check Valve»

The second oil separator (OSb) is provided on a portion of the discharge refrigerant pipe (41) between the second compressor (21b) and the first port of the four-way switching valve (22) (specifically, on the second discharge pipe (41b)). The second oil separator (OSb) and the second discharge check valve (CVb) are arranged on the second discharge pipe (41b) in this order from the inlet toward the outlet of the second discharge pipe (41b). The second oil separator (OSb) is capable of separating refrigerating machine oil from a refrigerant discharged from the second compressor (21b) and storing therein the refrigerating machine oil. The second discharge check valve (CVb) allows a refrigerant to flow from the inlet to the outlet of the second discharge pipe (41b), but blocks a refrigerant from flowing in the reverse direction.

### «Oil Return Pipe»

The oil return pipe (47) is used to supply the refrigerating machine oil stored in the first and second oil separators (OSa, OSb) to the injection pipe (44). In this example, the oil return pipe (47) includes first and second oil return sub-pipes (47a, 47b) each having one end connected to an associated one of the first and second oil separators (OSa, OSb), and a main oil return pipe (47c) connecting the other ends of the first and second oil return sub-pipes (47a, 47b) to an intermediate portion of the injection pipe (44) (specifically, an intermediate portion (Q6) of the second main injection pipe (44n)).

### «First Capillary Tube»

The first capillary tube (CTa) is provided on a portion of the oil return pipe (47) between the first oil separator (OSa) and the intermediate portion (Q6) of the injection pipe (44) (specifically, on the first oil return sub-pipe (47a)).

### «Second Capillary Tube and Oil Return Check Valve»

The second capillary tube (CTb) and the oil return check valve (CVc) are provided on a portion of the oil return pipe (47) between the second oil separator (OSb) and the intermediate portion (Q6) of the injection pipe (44) (specifically, on the second oil return sub-pipe (47b)). The oil return check valve (CVc) and the second capillary tube (CTb) are arranged on the second oil return sub-pipe (47b) in this order from the inlet toward the outlet of the second oil return sub-pipe (47b). The oil return check valve (CVc) allows a refrigerant to flow from the inlet to the outlet of the second oil return sub-pipe (47b), but blocks a refrigerant from flowing in the reverse direction.

### <Utilization-Side Circuit>

The utilization-side circuit (18) includes a utilization-side heat exchanger (51), and an expansion valve circuit portion (52) including a utilization-side expansion valve (53). The utilization-side circuit (18) also includes a utilization-side liquid refrigerant pipe (56) and a utilization-side gaseous refrigerant pipe (57). One end of the utilization-side liquid refrigerant pipe (56) is connected to the liquid interconnecting pipe (13), and the other end thereof is connected to the liquid end of the utilization-side heat exchanger (51). One end of the utilization-side gaseous refrigerant pipe (57) is connected to the gas end of the utilization-side heat exchanger (51), and the other end thereof is connected to the gas interconnecting pipe (14).

### «Utilization-Side Heat Exchanger»

The utilization-side heat exchanger (51) has its liquid end connected to the liquid interconnecting pipe (13) through the utilization-side liquid refrigerant pipe (56), and has its gas end connected to the gas interconnecting pipe (14) through the utilization-side gaseous refrigerant pipe (57). The utilization-side fan (19) is disposed near the utilization-side heat exchanger (51). The utilization-side heat exchanger (51) is configured to exchange heat between a refrigerant and utilization-side air (i.e., inside air) transferred by the utilization-side fan (19). The utilization-side heat exchanger (51) is configured as, for example, a cross-fin, fin-and-tube heat exchanger.

### «Expansion Valve Circuit Portion»

The expansion valve circuit portion (52) is connected between the liquid end of the utilization-side heat exchanger (51) and the liquid interconnecting pipe (13). In this example, the expansion valve circuit portion (52) is provided on the utilization-side liquid refrigerant pipe (56). The expansion valve circuit portion (52) includes the utilization-side expansion valve (53), a main pipe (60), a bypass pipe (70), and a switching mechanism (54).

### -Utilization-Side Expansion Valve-

The utilization-side expansion valve (53) is a temperature sensitive expansion valve. Specifically, the utilization-side expansion valve (53) is configured as a thermostatic expansion valve. In this example, the utilization-side expansion valve (53) is configured as an externally equalized thermostatic expansion valve. More specifically, the utilization-side expansion valve (53) includes a temperature sensitive cylinder (53a) attached to the utilization-side gaseous refrigerant pipe (57), and an equalizer (53b) connected to an intermediate portion of the utilization-side gaseous refrigerant pipe (57), and has its opening regulated in accordance with the temperature of the temperature sensitive cylinder (53a) and the pressure of a refrigerant in the equalizer (53b). The temperature sensitive cylinder (53a) is filled with the same refrigerant as that circulating in the refrigerant circuit (20). Thus, the pressure of the refrigerant in the temperature sensitive cylinder (53a) is a saturation pressure corresponding to the temperature of the refrigerant in the utilization-side gaseous refrigerant pipe (57).

### -Main Pipe-

The main pipe (60) allows the refrigerant to flow between the utilization-side heat exchanger (51) and the liquid interconnecting pipe (13) via the utilization-side expansion valve (53). The main pipe (60) is provided with the utilization-side expansion valve (53). In this example, the main pipe (60) constitutes part of the utilization-side liquid refrigerant pipe (56). Specifically, the main pipe (60) has two ends respectively connected to the liquid interconnecting pipe (13) and the liquid end of the utilization-side heat exchanger (51).

### -Bypass Pipe-

The bypass pipe (70) allows the refrigerant to bypass the main pipe (60) to flow between the utilization-side heat exchanger (51) and the liquid interconnecting pipe (13). In this example, the bypass pipe (70) is connected in parallel with the main pipe (60) constituting part of the utilization-side liquid refrigerant pipe (56). Specifically, the bypass pipe (70) has two ends respectively connected to the liquid interconnecting pipe (13) and the liquid end of the utilization-side heat exchanger (51).

### -Switching Mechanism-

The switching mechanism (54) is configured to switch the state of the main pipe (60) (between an open state and a closed state) and the state of the bypass pipe (70) (between an open state and a closed state). In this example, the switching mechanism (54) includes a utilization-side on-off valve (61) for switching the state of the main pipe (60) between an open state and a closed state, a utilization-side check valve (62), a bypass on-off valve (71) for switching the state of the bypass pipe (70) between an open state and a closed state, and a bypass check valve (72).

### -Utilization-Side On-Off Valve-

The utilization-side on-off valve (61) is switchable between an open state and a closed state. In this example, the utilization-side on-off valve (52) is configured as, for example, a solenoid valve. The utilization-side on-off valve (61) is provided for the main pipe (60). In this example, the utilization-side on-off valve (61) is provided for the main pipe (60) between the utilization-side expansion valve (53) and the liquid interconnecting pipe (13).

### -Utilization-Side Check Valve-

The utilization-side check valve (62) is provided on the main pipe (60), and allows a refrigerant to flow only from the liquid interconnecting pipe (13) to the utilization-side heat exchanger (51). In this example, the utilization-side check valve (62) is provided for the main pipe (60) between the utilization-side heat exchanger (51) and the utilization-side expansion valve (53), and allows the refrigerant to flow only from the utilization-side expansion valve (53) to the utilization-side heat exchanger (51).

### -Bypass On-Off Valve-

The bypass on-off valve (71) is switchable between an open state and a closed state. In this example, the bypass on-off valve (52) is configured as, for example, a solenoid valve. The bypass on-off valve (71) is provided for the bypass pipe (70).

### -Bypass Check Valve-

The bypass check valve (72) is provided for the bypass pipe (70), and allows the refrigerant to flow only from the utilization-side heat exchanger (51) to the liquid interconnecting pipe (13). In this example, the bypass pipe (70) is provided for the bypass pipe (70) between the bypass on-off valve (71) and the liquid interconnecting pipe (13), and allows the refrigerant to flow only from the bypass on-off valve (71) to the liquid interconnecting pipe (13).

### <Various Sensors>

The refrigeration apparatus (10) is provided with various sensors such as a temperature sensor and a pressure sensor. In this example, the utilization-side unit (12) is provided with a refrigerant temperature sensor (81). The refrigerant temperature sensor (81) detects the temperature of the refrigerant at the outlet of the utilization-side heat exchanger (51) in the defrosting operation (i.e., the temperature of the refrigerant that has flowed out of the utilization-side heat exchanger (51) in the defrosting operation). In this example, the refrigerant temperature sensor (81) is disposed at the utilization-side liquid refrigerant pipe (56) between the expansion valve circuit portion (52) and the liquid interconnecting pipe (13), and detects the temperature of the refrigerant at this position in the defrosting operation as the temperature of the refrigerant at the outlet of the utilization-side heat exchanger (51) in the defrosting operation.

### <Controller (Control Section)>

The controller (80) controls components of the refrigeration apparatus (10), based on values sensed by the various sensors provided for the refrigeration apparatus (10) and external signals, to control operations of the refrigeration apparatus (10). Specifically, the controller (80) controls the heat-source-side fan (17), the utilization-side fans (19), the first and second compressors (21a, 21b), the four-way switching valve (22), the subcooling expansion valve (31), the intermediate expansion valve (32), the intermediate on-off valve (33), the heat-source-side expansion valve (36), and the switching mechanism (54) (the utilization-side on-on-off valve (61) and the bypass on-off valve (71) in this example).

The controller (80) may include a heat-source-side controller which controls the components of the heat-source-side unit (11), and a plurality of utilization-side controllers each of which controls the components of an associated one of the utilization-side units (12). The heat-source-side controller and the plurality of utilization-side controllers can communicate with each other.

In this example, the refrigeration apparatus (10) selectively performs a cooling operation and a defrosting operation. The cooling operation is performed to cool an internal space, and the defrosting operation is performed to melt frost formed on the utilization-side heat exchanger (51).

### <Cooling Operation>

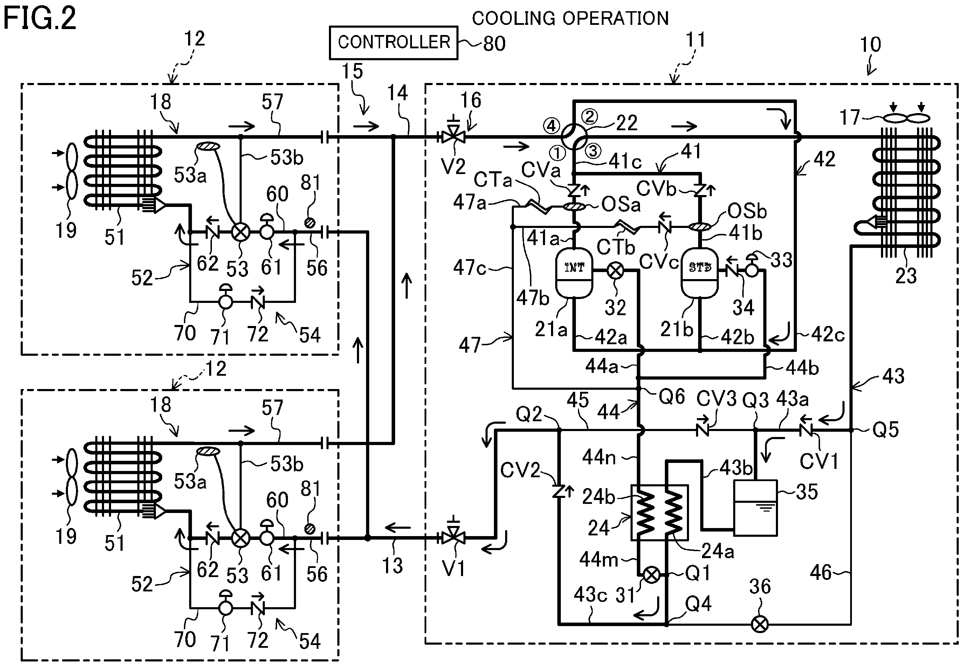

Next, the cooling operation will be described with reference to FIG. 2. In the cooling operation, the refrigerant circulates in the refrigerant circuit (20) to perform a refrigeration cycle in which the heat-source-side heat exchanger (23) functions as a condenser, and the utilization-side heat exchanger (51) functions as an evaporator.

In the heat-source-side unit (11), the four-way switching valve (22) is placed in the first state. Thus, the discharge ports of the first and second compressors (21a, 21b) communicate with the gas end of the heat-source-side heat exchanger (23), and the suction ports of the first and second compressors (21a, 21b) communicate with the gas interconnecting pipe (14). Furthermore, the first and second compressors (21a, 21b) and the heat-source-side fan (17) are driven, the opening of the subcooling expansion valve (31) and the opening of the intermediate expansion valve (32) are regulated, the intermediate on-off valve (33) is opened, and the heat-source-side heat expansion valve (36) is fully closed.

In each of the utilization-side units (12), the utilization-side fan (19) is driven. The bypass on-off valve (71) is closed to close the bypass pipe (70). That is to say, the refrigerant is blocked from flowing into the bypass pipe. Depending on whether the internal space needs to be cooled or not, the utilization-side on-off valve (61) is opened or closed to open the main pipe (60) (to allow the refrigerant to flow into the main pipe) or close the main pipe (60). Specifically, the controller (80) opens the utilization-side on-off valve (61) to open the main pipe (60) if the internal space needs to be cooled (e.g., if the temperature of the inside air exceeds a predetermined target cooling temperature). The controller (80) closes the utilization-side on-off valve (61) to close the main pipe (60) if the internal space does not need to be cooled (e.g., if the temperature of the inside air does not exceed the target cooling temperature). The opening of the utilization-side expansion valve (53) is automatically adjusted in accordance with the temperature of the temperature sensitive cylinder (53a), and the pressure of the refrigerant in the equalizer (53b), of the utilization-side expansion valve (53). In the example shown in FIG. 2, the utilization-side on-off valves (61) of all of the utilization-side units (12) are opened to open the associated main pipes (60).

A refrigerant discharged from the first and second compressors (21a, 21b) passes through the first and second oil separators (OSa, OSb) and the first and second discharge check valves (CVa, CVb) in the discharge refrigerant pipe (41), then flows through the four-way switching valve (22) into the heat-source-side heat exchanger (23), dissipates heat to the heat-source-side air (i.e., outside air) in the heat-source-side heat exchanger (23), and condenses. The refrigerant (high-pressure refrigerant) that has flowed out of the heat-source-side heat exchanger (23) passes through the first check valve (CV1) in the first heat-source-side liquid pipe (43a), then passes through the receiver (35) and the second heat-source-side liquid pipe (43b) in this order, flows into the first channels (24a) of the subcooling heat exchanger (24), and is subcooled by having its heat absorbed by a refrigerant (intermediate-pressure refrigerant) flowing through the second channels (24b) of the subcooling heat exchanger (24). The refrigerant that has flowed out of the first channels (24a) of the subcooling heat exchanger (24) flows into the third heat-source-side liquid pipe (43c). Then, part of the refrigerant flows into the first main injection pipe (44m). The remaining part passes through the second check valve (CV2) in the third heat-source-side liquid pipe (43c), and then flows through the liquid stop valve (VI) into the liquid interconnecting pipe (13).

The refrigerant that has flowed into the first main injection pipe (44m) is decompressed in the subcooling expansion valve (31), flows into the second channels (24b) of the subcooling heat exchanger (24), and absorbs heat from the refrigerant (high-pressure refrigerant) flowing through the first channels (24a) of the subcooling heat exchanger (24). The refrigerant that has flowed out of the second channels (24b) of the subcooling heat exchanger (24) passes through the second main injection pipe (44n). Then, part of the refrigerant flows into the first injection branch pipe (44a). The remaining part flows into the second injection branch pipe (44b). The refrigerant that has flowed into the first injection branch pipe (44a) is decompressed in the intermediate expansion valve (32), and flows into the intermediate port of the first compressor (21a). The refrigerant that has flowed into the second injection branch pipe (44b) passes through the intermediate on-off valve (33) and the intermediate check valve (34) in this order, and then flows into the intermediate port of the second compressor (21b). The refrigerant that has flowed through the intermediate ports into the first and second compressors (21a, 21b) is mixed with a refrigerant in the first and second compressors (21a, 21b) (specifically, a refrigerant in the compression chamber). That is to say, the refrigerant in the first and second compressors (21a, 21b) is compressed while being cooled.

The refrigerant that has flowed into the liquid interconnecting pipe (13) flows into the utilization-side unit (12) having the utilization-side on-off valve (61) opened to open the main pipe (60). In the utilization-side unit (12) having the utilization-side on-off valve (61) opened to open the main pipe (60), the refrigerant that has flowed through the liquid interconnecting pipe (13) into the main pipe (60) passes through the open utilization-side on-off valve (61) so as to be decompressed in the utilization-side expansion valve (53), then passes through the utilization-side check valve (62) to flow into the utilization-side heat exchanger (51), and absorbs heat from utilization-side air (i.e., inside air) in the utilization-side heat exchanger (51) to evaporate. Thus, the utilization-side air is cooled. The refrigerant that has flowed out of the utilization-side heat exchanger (51) passes through the utilization-side gaseous refrigerant pipe (57), the gas interconnecting pipe (14), and the gas stop valve (V2), four-way switching valve (22), and suction refrigerant pipe (42) of the heat-source-side unit (11) in this order, and is sucked into the suction ports of the first and second compressors (21a, 21b).

The first and second oil separators (OSa, OSb) separate refrigerating machine oil from the refrigerant (i.e., the refrigerant discharged from the first and second compressors (21a, 21b)), and store therein the refrigerating machine oil. The refrigerating machine oil stored in the first oil separator (OSa) passes through the first capillary tube (CTa) in the first oil return sub-pipe (47a), and then flows into the main oil return pipe (47c). The refrigerating machine oil stored in the second oil separator (OSb) passes through the oil return check valve (CVc) and the second capillary tube (CTb) in this order in the second oil return sub-pipe (47b), and then flows into the main oil return pipe (47c). The refrigerating machine oil that has flowed into the main oil return pipe (47c) flows into the second main injection pipe (44n) to join with a refrigerant flowing through the second main injection pipe (44n).

If the utilization-side on-off valve (61) of each utilization-side unit (12) is closed to close the main pipe (60), no refrigerant flows through the utilization-side heat exchanger (51) of the utilization-side unit (12).

### <Defrosting Operation>

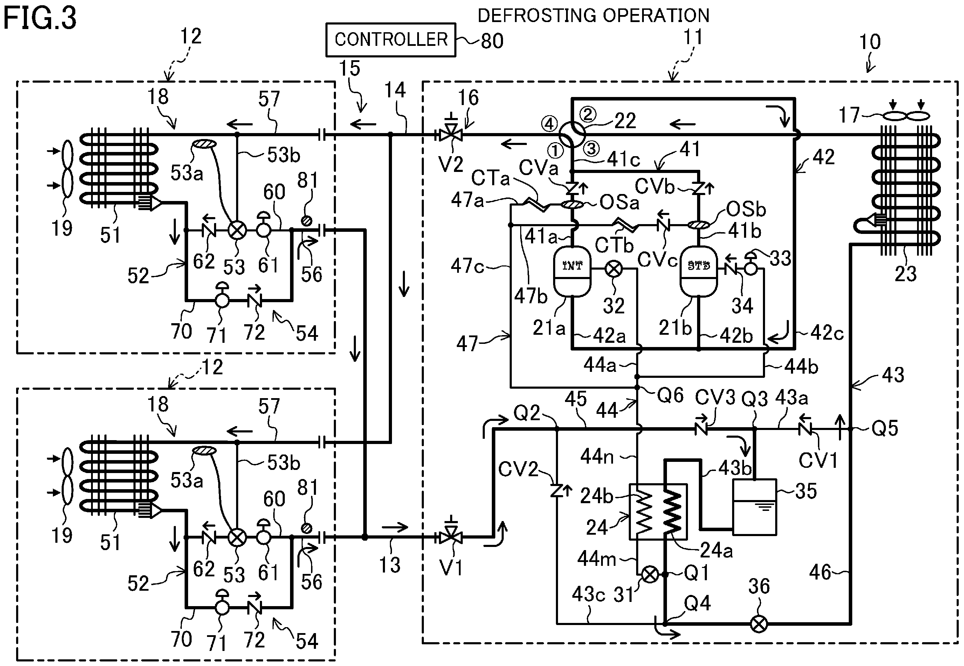

The defrosting operation will be described below with reference to FIG. 3. In the defrosting operation, the refrigerant circulates in the refrigerant circuit (20) to perform a refrigeration cycle in which the utilization-side heat exchanger (51) functions as a condenser, and the heat-source-side heat exchanger (23) functions as an evaporator.

In the heat-source-side unit (11), the four-way switching valve (22) is placed in the second state. Thus, the discharge ports of the first and second compressors (21a, 21b) communicate with the gas interconnecting pipe (14), and the suction ports of the first and second compressors (21a, 21b) communicate with the gas end of the heat-source-side heat exchanger (23). Furthermore, the first and second compressors (21a, 21b) and the heat-source-side fan (17) are driven, the subcooling expansion valve (31) and the intermediate expansion valve (32) are fully closed, the intermediate on-off valve (33) is closed, and the opening of the heat-source-side heat expansion valve (36) is regulated.

In each utilization-side unit (12), the utilization-side fan (19) is stopped. The utilization-side on-off valve (61) is closed to close the main pipe (60). Depending on the degree to which the utilization-side heat exchanger (51) is defrosted, the bypass on-off valve (71) is opened or closed to open or close the bypass pipe (70). How the switching mechanism (54) is controlled in the defrosting operation (how the bypass pipe (70) is opened or closed) will be described in detail later. The opening of the utilization-side expansion valve (53) is automatically adjusted in accordance with the temperature of the temperature sensitive cylinder (53a), and the pressure of the refrigerant in the equalizer (53b), of the utilization-side expansion valve (53). In the example shown in FIG. 3, the bypass on-off valves (71) of all of the utilization-side units (12) are opened to open the bypass pipe (70).

The refrigerant discharged from the first and second compressors (21a, 21b) passes through the first and second oil separators (OSa, OSb) and the first and second discharge check valves (CVa, CVb) in the discharge refrigerant pipe (41), then passes through the four-way switching valve (22) and the gas stop valve (V2) in this order, and flows into the gas interconnecting pipe (14).

The refrigerant that has flowed into the gas interconnecting pipe (14) flows into the utilization-side unit (12) having the bypass on-off valve (71) opened to open the bypass pipe (70). In the utilization-side unit (12) having the bypass on-off valve (71) opened to open the bypass pipe (70), the refrigerant that has flowed through the gas interconnecting pipe (14) into the utilization-side unit (12) passes through the utilization-side gaseous refrigerant pipe (57), flows into the utilization-side heat exchanger (51), and dissipates heat in the utilization-side heat exchanger (51) to condense. Thus, frost formed on the utilization-side heat exchanger (51) is heated to melt. The refrigerant that has flowed out of the utilization-side heat exchanger (51) passes through the open bypass on-off valve (71) and the bypass check valve (72) in this order in the bypass pipe (70), and flows into the liquid interconnecting pipe (13).

The refrigerant that has passed through the liquid interconnecting pipe (13) passes through the liquid stop valve (VI) of the heat-source-side unit (11), and flows into the third heat-source-side liquid pipe (43c). The refrigerant that has flowed into the third heat-source-side liquid pipe (43c) flows into the first connection pipe (45) at the second intermediate portion (Q2), passes through the second check valve (CV2) in the first connection pipe (45), and flows into the intermediate portion (third intermediate portion (Q3)) of the first heat-source-side liquid pipe (43a). The refrigerant that has flowed into the intermediate portion of the first heat-source-side liquid pipe (43a) passes through the receiver (35), the second heat-source-side liquid pipe (43b), and the first channels (24a) of the subcooling heat exchanger (24) in this order, and flows into the third heat-source-side liquid pipe (43c). The refrigerant that has flowed into the third heat-source-side liquid pipe (43c) flows into the second connection pipe (46) at the fourth intermediate portion (Q4), is decompressed in the heat-source-side expansion valve (36), and flows into the intermediate portion (fifth intermediate portion (Q5)) of the first heat-source-side liquid pipe (43a). The refrigerant that has flowed into the intermediate portion of the first heat-source-side liquid pipe (43a) flows into the heat-source-side heat exchanger (23), and absorbs heat from the heat-source-side air (i.e., outside air) in the heat-source-side heat exchanger (23) to evaporate. The refrigerant that has flowed out of the heat-source-side heat exchanger (23) passes through the four-way switching valve (22) and the suction refrigerant pipe (42) in this order, and is sucked into the suction ports of the first and second compressors (21a, 21b).

If the bypass on-off valve (71) of the utilization-side unit (12) is closed to close the bypass pipe (70), no refrigerant flows through the utilization-side heat exchanger (51) of the utilization-side unit (12).

### <Control of Switching Mechanism During Defrosting Operation>

Next, how the switching mechanism (54) is controlled in the defrosting operation (how the bypass pipe (70) is opened or closed) will be described. In this example, if the bypass on-off valve (71) is opened, the bypass pipe (70) is opened, and if the bypass on-off valve (71) is closed, the bypass pipe (70) is closed.

First, the controller (80) controls the components of the refrigeration apparatus (10) to start the defrosting operation. For example, if a predetermined period (cooling period) has elapsed since the start of the cooling operation, the controller (80) controls the components of the refrigeration apparatus (10) to end the cooling operation and start the defrosting operation.

Starting the defrosting operation triggers the controller (80) to control the switching mechanism (54) to close the main pipe (60) and open the bypass pipe (70) in each of the plurality of utilization-side units (12). Thus, the refrigerant (high-temperature and high-pressure refrigerant) is supplied through the gas interconnecting pipe (14) into the plurality of utilization-side units (12). In each of the plurality of utilization-side units (12), defrosting of the utilization-side heat exchanger (51) using the high-temperature and high-pressure refrigerant is started.

The differences among the conditions where the utilization-side heat exchangers (51) are used (e.g., how frost is formed on the utilization-side heat exchangers (51)), among the conditions where the utilization-side heat exchangers (51) are installed (e.g., the arrangement of pipes and the level difference), and among the sizes of the utilization-side heat exchangers (51), for example, are expected to cause defrosting of the utilization-side heat exchangers (51) of the utilization-side units (12) to end at different timings.

Thus, in the refrigeration apparatus (10) according to this embodiment, after the start of the defrosting operation, the controller (80) monitors whether or not defrosting of the utilization-side heat exchangers (51) of the utilization-side units (12) has been completed. If defrosting of the utilization-side heat exchanger (51) of any one of the utilization-side units (12) has been completed, the controller (80) controls the switching mechanism (54) so that the open bypass pipe (70) of the utilization-side unit (12) having the defrosted utilization-side heat exchanger (51) is closed. For example, the controller (80) monitors a value detected by the refrigerant temperature sensor (81) of each of the utilization-side units (12) (the temperature of the refrigerant at the outlet of the utilization-side heat exchanger (51) in the defrosting operation). If the value detected by the refrigerant temperature sensor (81) exceeds a predetermined defrosting completion temperature, the controller (80) determines that defrosting of the utilization-side heat exchanger (51) of the utilization-side unit (12) including the refrigerant temperature sensor (81) has been completed. The defrosting completion temperature is set to be equal to the temperature of the refrigerant flowing out of the utilization-side heat exchanger (51) if a determination can be made that defrosting of the utilization-side heat exchanger (51) has been completed.

In the utilization-side unit (12) having the bypass pipe (70) closed during the defrosting operation, the refrigerant may accumulate in the utilization-side heat exchanger (51).

To address this problem, in the refrigeration apparatus (10) of this embodiment, the controller (80) controls the switching mechanism (54) such that the bypass pipe(s) (70) of one of the utilization-side units (12) having the utilization-side heat exchanger (51) that has not been completely defrosted yet is maintained in an open state, and such that the bypass pipe (70) of the other utilization-side unit (12) having the defrosted utilization-side heat exchanger (51) is intermittently opened. For example, if a predetermined closing period (e.g., 10 minutes) has elapsed since the controller (80) switched the open bypass pipe (70) of the utilization-side unit (12) having the utilization-side heat exchanger (51) determined to have been completely defrosted to the closed state, the controller (80) switches the closed bypass pipe (70) to the open state. If a predetermined opening period (e.g., two minutes) has elapsed since then, the controller (80) switches the open bypass pipe to the closed state.

The controller (80) controls the components of the refrigeration apparatus (10) such that if defrosting of the utilization-side heat exchangers (51) of all of the utilization-side units (12) has been completed, the defrosting operation ends, and the cooling operation is restarted. The controller (80) may control the components of the refrigeration apparatus (10) such that if a predetermined period (a defrosting period) has elapsed since the start of the defrosting operation, the defrosting operation ends, and the cooling operation is restarted. The defrosting period is set to be sufficiently longer than the closing period and the opening period (e.g., 30 minutes).

### <Advantages of Embodiment>

As can be seen from the foregoing description, if the switching mechanism (54) is controlled to open the main pipe (60), a refrigerant is allowed to flow through the temperature sensitive utilization-side expansion valve (53) between the liquid interconnecting pipe (13) and the utilization-side heat exchanger (51). If the switching mechanism (54) is controlled to open the bypass pipe (70), a refrigerant is allowed to bypass the temperature sensitive utilization-side expansion valve (53) and flow between the liquid interconnecting pipe (13) and the utilization-side heat exchanger (51). In other words, even if the refrigerant is not allowed to flow through the utilization-side expansion valve (53), the bypass pipe (70) is opened to allow the refrigerant to flow between the liquid interconnecting pipe (13) and the utilization-side heat exchanger (51). Thus, in the utilization-side unit (12) including the temperature sensitive utilization-side expansion valve (53), a refrigerant is allowed to optionally flow between the liquid interconnecting pipe (13) and the utilization-side heat exchanger (51).

The bypass on-off valve (71) in the bypass pipe (70) can be opened to open the bypass pipe (70), and can be closed to close the bypass pipe (70). In this manner, the bypass on-off valve (71) can be switched between the open state and the closed state to open and close the bypass pipe (70).

The bypass check valve (72) in the bypass pipe (70) can block the flow of a refrigerant from the liquid interconnecting pipe (13) to the utilization-side heat exchanger (51) in the bypass pipe (70). This can prevent the refrigerant from leaking through the bypass pipe (70) (i.e., the refrigerant from flowing from the liquid interconnecting pipe (13) through the bypass pipe (70) into the utilization-side heat exchanger (51)) if the refrigerant is passed from the liquid interconnecting pipe (13) through the open main pipe (60) into the utilization-side heat exchanger (51) (specifically, during the cooling operation). As a result, if the refrigerant is passed from the liquid interconnecting pipe (13) through the open main pipe (60) into the utilization-side heat exchanger (51) (specifically, during the cooling operation), the flow rate of the refrigerant through the main pipe (60) can be maintained.

The utilization-side on-off valve (61) in the main pipe (60) can be opened to open the main pipe (60), and can be closed to close the main pipe (60). In this manner, the utilization-side on-off valve (61) can be switched between the open state and the closed state to open and close the main pipe (60).

The utilization-side check valve (62) in the main pipe (60) can block the flow of the refrigerant from the utilization-side heat exchanger (51) to the liquid interconnecting pipe (13) in the main pipe (60). This can prevent the refrigerant from leaking through the main pipe (60) (i.e., the refrigerant from flowing from the utilization-side heat exchanger (51) through the main pipe (60) into the liquid interconnecting pipe (13)) if the refrigerant is passed from the utilization-side heat exchanger (51) through the open bypass pipe (70) into the liquid interconnecting pipe (13) (specifically, during the defrosting operation). As a result, if the refrigerant is passed from the utilization-side heat exchanger (51) through the open bypass pipe (70) into the liquid interconnecting pipe (13) (specifically, during the defrosting operation), the flow rate of the refrigerant through the bypass pipe (70) can be maintained.

When the defrosting operation is started, the bypass pipe (70) is opened to ensure a passage of the refrigerant from the gas interconnecting pipe (14) to the liquid interconnecting pipe (13) via the utilization-side heat exchanger (51) and the bypass pipe (70) in this order. Thus, the refrigerant (high-temperature and high-pressure refrigerant) can be supplied through the gas interconnecting pipe (14) into each of the utilization-side heat exchangers (51). This allows the utilization-side heat exchanger (51) to be defrosted using the high-temperature and high-pressure refrigerant.

In the utilization-side unit (12) having the defrosted utilization-side heat exchanger (51), the bypass pipe (70) is switched from the open state to the closed state, thereby blocking the supply of the refrigerant (high-temperature and high-pressure refrigerant) from the gas interconnecting pipe (14) to the utilization-side heat exchanger (51) in the utilization-side unit (12) having defrosted the utilization-side heat exchanger (51). Thus, in the utilization-side unit (12) having the utilization-side heat exchanger (51) that has not been completely defrosted yet, the supply of the refrigerant (high-temperature and high-pressure refrigerant) from the gas interconnecting pipe (14) to the utilization-side heat exchanger (51) can be accelerated. This can accelerate defrosting of the utilization-side heat exchanger (51) in the utilization-side unit (12) having the utilization-side heat exchanger (51) that has not been completely defrosted yet. Specifically, the period of time required to defrost the utilization-side heat exchanger (51) of the utilization-side unit (12) having the utilization-side heat exchanger (51) that has not been completely defrosted yet can be shortened.

If the bypass pipe (70) of the utilization-side unit (12) having the defrosted utilization-side heat exchanger (51) is intermittently opened, the refrigerant in the utilization-side heat exchanger (51) is intermittently released through the bypass pipe (70) to the liquid interconnecting pipe (13) in the utilization-side unit (12) having the defrosted utilization-side heat exchanger (51). This can prevent the refrigerant from accumulating in the utilization-side heat exchanger (51) of the utilization-side unit (12) having the defrosted utilization-side heat exchanger (51).

If a temperature sensitive expansion valve having its opening automatically regulated in accordance with the temperature of the temperature sensitive cylinder (53a) is used as the utilization-side expansion valve (53), mechanisms (control wires and other mechanisms) or limitations required if an electronic expansion valve having its opening regulated under control by the controller (80) is used as the utilization-side expansion valve (53) can be omitted.

### (Variation of Utilization-Side Unit)

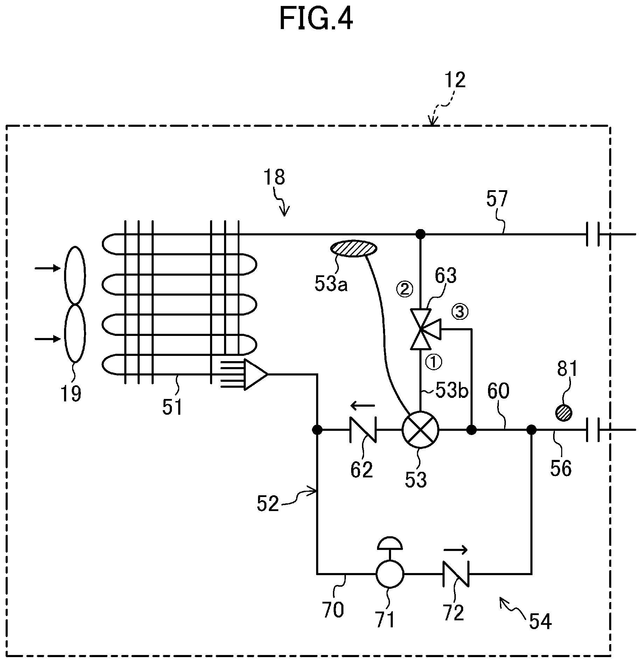

As shown in FIG. 4, in the utilization-side unit (12), the switching mechanism (54) may be switchable between a first connection state and a second connection state. In the first connection state, the equalizer (53b) of the utilization-side expansion valve (53) is connected to an intermediate portion of the utilization-side gas refrigerant pipe (57). In the second connection state, the equalizer (53b) of the utilization-side expansion valve (53) is connected to an intermediate portion of the main pipe (60) between the utilization-side expansion valve (53) and the liquid interconnecting pipe (13).

In FIG. 4, the switching mechanism (54) includes a three-way valve (63) instead of the utilization-side on-off valve (61) shown in FIG. 1. The three-way valve (63) has a first port, a second port, and a third port. The first port is connected to the equalizer (53b) of the utilization-side expansion valve (53). The second port is connected to an intermediate portion of the utilization-side gas refrigerant pipe (57) (specifically, the intermediate portion between a portion of the utilization-side gas refrigerant pipe (57) to which the temperature sensitive cylinder (53a) is attached and the gas interconnecting pipe (14)). The third port is connected to the intermediate portion of the main pipe (60) (specifically, the intermediate portion between the liquid interconnecting pipe (13) and the utilization-side expansion valve (53)). The three-way valve (63) is switchable between a first state where the first port and the second port communicate with each other and a second state where the first port and the third port communicate with each other.

If the three-way valve (63) is placed in the first state (where the first port and the second port communicate with each other), the switching mechanism (54) is in the first connection state (where the equalizer (53b) of the utilization-side expansion valve (53) is connected to the intermediate portion of the utilization-side gas refrigerant pipe (57)). If the three-way valve (63) is placed in the second state (where the first port and the third port communicate with each other), the switching mechanism (54) is in the second connection state (where the equalizer (53b) of the utilization-side expansion valve (53) is connected to the intermediate portion of the main pipe (60) between the utilization-side expansion valve (53) and the liquid interconnecting pipe (13)).

In this example, the utilization-side expansion valve (53) is configured as an externally equalized thermostatic expansion valve. Specifically, the utilization-side expansion valve (53) is opened if the pressure of the refrigerant in the temperature sensitive cylinder (53a) exceeds the sum of the pressure of the refrigerant in the equalizer (53b) and a predetermined resistance (e.g., an urging force of a spring urging a needle valve inside the utilization-side expansion valve (53) toward a diaphragm). The utilization-side expansion valve (53) is closed if the pressure of the refrigerant in the temperature sensitive cylinder (53a) is below the sum of the pressure of the refrigerant in the equalizer (53b) and the resistance. The resistance is set such that if the equalizer (53b) of the utilization-side expansion valve (53) is connected to an intermediate portion of the utilization-side gas refrigerant pipe (57) during the cooling operation, the pressure (low pressure) of the refrigerant in the temperature sensitive cylinder (53a) of the utilization-side expansion valve (53) exceeds the sum of the pressure of the equalizer (53b) (low pressure) and the resistance (i.e., such that the utilization-side expansion valve (53) is opened).

### <Cooling Operation>

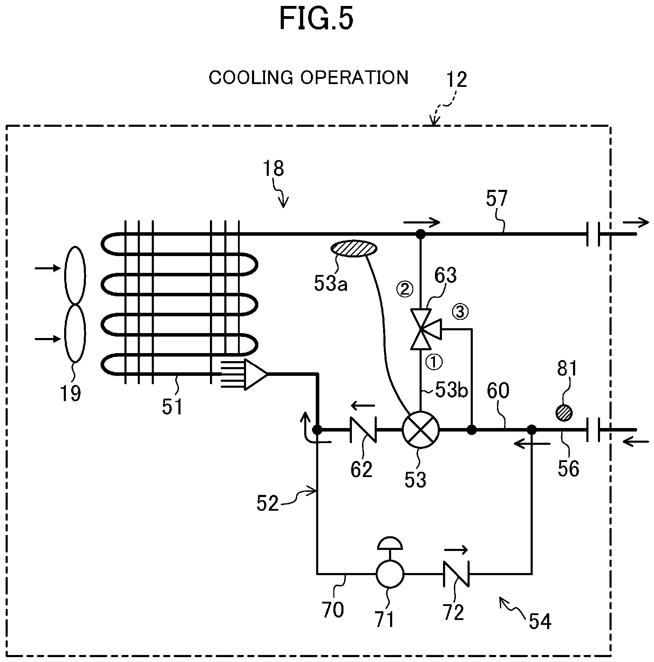

As shown in FIG. 5, while the refrigeration apparatus (10) including the utilization-side units (12) shown in FIG. 4 performs the cooling operation, the bypass on-off valve (71) is closed to close the bypass pipe (70). Depending on whether the internal space needs to be cooled or not, the three-way valve (63) is placed in the first or second state. Specifically, if the internal space needs to be cooled (e.g., if the temperature of the inside air exceeds a predetermined target cooling temperature), the controller (80) places the three-way valve (63) in the first state (where the first port and the second port communicate with each other). If the internal space does not need to be cooled, the controller (80) places the three-way valve (63) in the second state (where the first port and the third port communicate with each other). In the example shown in FIG. 5, the three-way valve (63) is placed in the first state such that the equalizer (53b) of the utilization-side expansion valve (53) is connected to the intermediate portion of the utilization-side gas refrigerant pipe (57). How other components are controlled is similar to how those of the refrigeration apparatus (10) shown in FIG. 1 are controlled.

If, during the cooling operation, the three-way valve (63) is placed in the first state, the equalizer (53b) of the utilization-side expansion valve (53) is connected to the intermediate portion of the utilization-side gas refrigerant pipe (57). During the cooling operation, the refrigerant in the utilization-side gas refrigerant pipe (57) has a low temperature and a low pressure. Thus, since the pressure (low pressure) of the refrigerant in the temperature sensitive cylinder (53a) exceeds the sum of the pressure (low pressure) of the refrigerant in the equalizer (53b) and the resistance, the utilization-side expansion valve (53) is opened. The opening of the utilization-side expansion valve (53) is regulated in accordance with the temperature of the temperature sensitive cylinder (53a) and the pressure of the refrigerant in the equalizer (53b).

If, during the cooling operation, the three-way valve (63) is placed in the second state, the equalizer (53b) of the utilization-side expansion valve (53) is connected to the intermediate portion of the main pipe (60) between the utilization-side expansion valve (53) and the liquid interconnecting pipe (13). During the cooling operation, the refrigerant in a pipe portion of the main pipe (60) between the utilization-side expansion valve (53) and the liquid interconnecting pipe (13) has a high temperature and a high pressure, and the refrigerant in the utilization-side gas refrigerant pipe (57) has a relatively low temperature and a relatively low pressure. Thus, since the pressure (low pressure) of the refrigerant in the temperature sensitive cylinder (53a) is below the sum of the pressure (high pressure) of the refrigerant in the equalizer (53b) and the resistance, the utilization-side expansion valve (53) is closed.

### <Defrosting Operation>

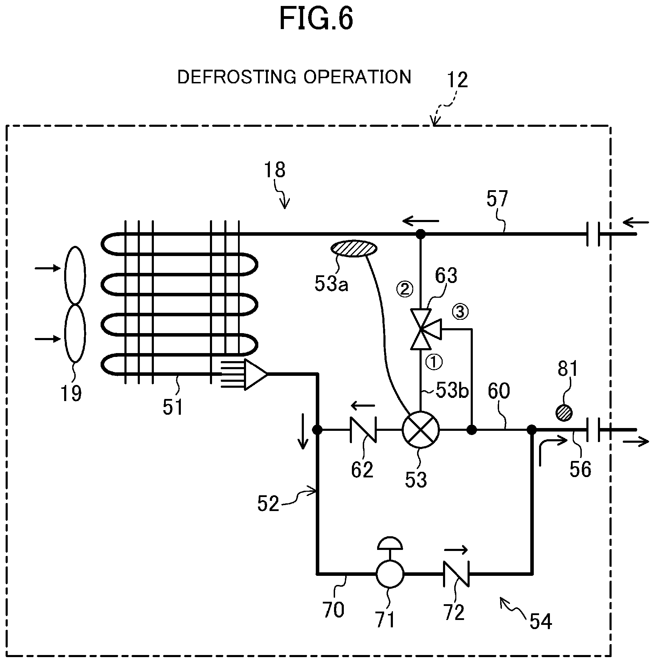

As shown in FIG. 6, while the refrigeration apparatus (10) including the utilization-side unit (12) shown in FIG. 4 performs the defrosting operation, the three-way valve (63) is placed in the second state (where the first port and the third port communicate with each other) such that the equalizer (53b) of the utilization-side expansion valve (53) is connected to the intermediate portion of the main pipe (60) between the utilization-side expansion valve (53) and the liquid interconnecting pipe (13). Thus, the utilization-side expansion valve (53) is closed. Depending on the degree to which the utilization-side heat exchanger (51) is defrosted, the bypass on-off valve (71) is opened or closed to open or close the bypass pipe (70). In the example shown in FIG. 6, the bypass on-off valve (71) is opened to open the bypass pipe (70). How other components are controlled is similar to how those of the refrigeration apparatus (10) shown in FIG. 1 are controlled.

If, during the defrosting operation, the three-way valve (63) is placed in the second state, the equalizer (53b) of the utilization-side expansion valve (53) is connected to the intermediate portion of the main pipe (60) between the utilization-side expansion valve (53) and the liquid interconnecting pipe (13). During the defrosting operation, the refrigerant in the utilization-side gas refrigerant pipe (57) has a high temperature and a high pressure, and the refrigerant in a pipe portion of the main pipe (60) between the utilization-side expansion valve (53) and the liquid interconnecting pipe (13) has a high temperature and a high pressure. Thus, since the pressure (high pressure) of the refrigerant in the temperature sensitive cylinder (53a) exceeds the sum of the pressure (high pressure) of the refrigerant in the equalizer (53b) and the resistance, the utilization-side expansion valve (53) is opened.

### <Advantages of Variation of Utilization-Side Unit>

As can be seen from the foregoing description, in the cooling operation in which the refrigerant is circulated such that the heat-source-side heat exchanger (23) functions as a condenser and the utilization-side heat exchanger (51) functions as an evaporator (i.e., if an attempt is made to pass the refrigerant from the liquid interconnecting pipe (13) through the utilization-side expansion valve (51) to the gas interconnecting pipe (14)), if the switching mechanism (54) is placed in the first connection state (where the equalizer (53b) of the utilization-side expansion valve (53) is connected to the intermediate portion of the utilization-side gas refrigerant pipe (57)), the utilization-side expansion valve (53) can be opened to open the main pipe (60). If the switching mechanism (54) is placed in the second connection state (where the equalizer (53b) of the utilization-side expansion valve (53) is connected to the intermediate portion of the main pipe (60) between the utilization-side expansion valve (53) and the liquid interconnecting pipe (13)), the utilization-side expansion valve (53) can be closed to close the main pipe (60). As can be seen, the state of the switching mechanism (54) is switched to open and close the main pipe (60).

### (Other Embodiments)

In the foregoing description, the utilization-side on-off valve (61) is configured as a solenoid valve, for example. However, the utilization-side on-off valve (61) may be configured as a two-way valve. In this case, the utilization-side check valve (62) may be omitted. Likewise, the bypass on-off valve (71) is configured as a solenoid valve, for example. However, the bypass on-off valve (71) may be configured as a two-way valve. In this case, the bypass check valve (72) may be omitted. The bypass on-off valve (71) may be configured as a motor-operated valve.

In the foregoing description, an exemplary refrigeration apparatus (10) includes two utilization-side units (12). However, the number of utilization-side units (12) may be three or more.

In the foregoing description, an exemplary refrigerant circuit (20) includes two compressors (21a, 21b). However, the number of compressors may be one, or three or more.

The foregoing embodiments and variations may be combined together as appropriate. Note that the foregoing embodiments and variations are merely preferred examples in nature, and are not intended to limit the scope, applications, or use of the present invention.

### INDUSTRIAL APPLICABILITY

As can be seen from the foregoing description, the above-mentioned refrigeration apparatus is useful as a refrigeration apparatus which cools an internal space or any other space.

### DESCRIPTION OF REFERENCE CHARACTERS

- 10: Refrigeration Apparatus
- 11: Heat-Source-Side Unit
- 12: Utilization-Side Unit
- 13: Liquid Interconnecting Pipe
- 14: Gas Interconnecting Pipe
- 15: Refrigerant Circuit
- 21a: First Compressor
- 21b: Second Compressor
- 22: Four-Way Switching Valve
- 23: Heat-Source-Side Heat Exchanger
- 24: Subcooling Heat Exchanger
- 51: Utilization-Side Heat Exchanger
- 52: Expansion Valve Circuit Portion
- 53: Utilization-Side Expansion Valve
- 53a: Temperature Sensitive Cylinder
- 53b: Equalizer
- 54: Switching Mechanism
- 56: Utilization-Side Liquid Refrigerant Pipe
- 57: Utilization-Side Gaseous Refrigerant Pipe
- 60: Main Pipe
- 61: Utilization-Side On-Off Valve
- 62: Utilization-Side Check Valve
- 63: Three-Way Valve
- 70: Bypass Pipe
- 71: Bypass On-Off Valve
- 72: Bypass Check Valve
- 80: Controller
- 81: Refrigerant Temperature Sensor

## Claims

1. A refrigeration apparatus comprising:
a heat-source-side unit (11) including a heat-source-side heat exchanger (23);
a plurality of utilization-side units (12) each including a utilization-side heat exchanger (51) and an expansion valve circuit portion (52), the utilization-side units (12) being connected in parallel with the heat-source-side unit (11) through a liquid interconnecting pipe (13) and a gas interconnecting pipe (14) to form a refrigerant circuit (15) circulating a refrigerant therethrough; and
a controller (80), wherein each of the expansion valve circuit portion (52) includes:
a temperature sensitive utilization-side expansion valve (53);
a main pipe (60) allowing the refrigerant to flow between the utilization-side heat exchanger (51) and the liquid interconnecting pipe (13) via the utilization-side expansion valve (53);
a bypass pipe (70) allowing the refrigerant to bypass the main pipe (60) and flow between the utilization-side heat exchanger (51) and the liquid interconnecting pipe (13);
a switching mechanism (54) switching each of the main pipe (60) and the bypass pipe (70) between an open state and a closed state;
the controller (80) is configured to control the switching mechanism (54) such that, if a defrosting operation in which the refrigerant circulates through the refrigerant circuit (15) to cause the utilization-side heat exchangers (51) of the utilization-side units (12) to function as condensers and cause the heat-source-side heat exchanger (23) to function as an evaporator is started, the main pipe (60) is closed, and the bypass pipe (70) is opened in each of the plurality of utilization-side units (12);
wherein the controller (80) is configured to control the switching mechanism (54) such that, if the defrosting operation is started and the utilization-side heat exchanger (51) of any one of the utilization-side units (12) is completely defrosted, the bypass pipe (70) of the utilization-side unit (12) having the defrosted utilization-side heat exchanger (51) switches from an open state to a closed state.

2. The refrigeration apparatus of claim 1, wherein
the switching mechanism (54) includes a bypass on-off valve (71) switchable between an open state and a closed state, the bypass on-off valve (71) being provided for the bypass pipe (70).

3. The refrigeration apparatus of claim 2, wherein
the switching mechanism (54) further includes a bypass check valve (72) provided for the bypass pipe (70), the bypass check valve (72) allowing the refrigerant to flow only from the utilization-side heat exchanger (51) to the liquid interconnecting pipe (13).

4. The refrigeration apparatus of any one of claims 1 to 3, wherein
the switching mechanism (54) includes a utilization-side on-off valve (61) switchable between an open state and a closed state, the utilization-side on-off valve (61) being provided for the main pipe (60).

5. The refrigeration apparatus of claim 4, wherein
the switching mechanism (54) includes a utilization-side check valve (62) provided for the main pipe (60), the utilization-side check valve (62) allowing the refrigerant to flow only from the liquid interconnecting pipe (13) to the utilization-side heat exchanger (51).

6. The refrigeration apparatus of any one of claims 1 to 3, wherein
the utilization-side units (12) each include a utilization-side gas refrigerant pipe (57) through which a gas end of the utilization-side heat exchanger (51) is connected to the gas interconnecting pipe (14),
the utilization-side expansion valve (53) includes a temperature sensitive cylinder (53a) attached to the utilization-side gas refrigerant pipe (57), and an equalizer (53b), and
the switching mechanism (54) is switchable between a first connection state where the equalizer (53b) of the utilization-side expansion valve (53) is connected to an intermediate portion of the utilization-side gas refrigerant pipe (57) and a second connection state where the equalizer (53b) of the utilization-side expansion valve (53) is connected to an intermediate portion of the main pipe (60) between the utilization-side expansion valve (53) and the liquid interconnecting pipe (13).

7. The refrigeration apparatus of claim 6, wherein
the switching mechanism (54) includes a utilization-side check valve (62) provided for the main pipe (60), the utilization-side check valve (62) allowing the refrigerant to flow only from the liquid interconnecting pipe (13) to the utilization-side heat exchanger (51).

8. The refrigeration apparatus of claim 1, wherein
the controller (80) is configured to control the switching mechanism (54) such that the bypass pipe (70) of one of the utilization-side units (12) having the utilization-side heat exchanger (51) that has not been completely defrosted yet is maintained in the open state, and such that the bypass pipe (70) of the other utilization-side unit(s) having the defrosted utilization-side heat exchanger (51) is intermittently opened.

## Patentansprüche

1. Kühleinrichtung, umfassend:
eine wärmequellenseitige Einheit (11), die einen wärmequellenseitigen Wärmetauscher (23) einschließt;
eine Vielzahl von nutzungsseitigen Einheiten (12), die jeweils einen nutzungsseitigen Wärmetauscher (51) und einen Expansionsventilkreislaufabschnitt (52) einschließen, wobei die nutzungsseitigen Einheiten (12) mit der wärmequellenseitigen Einheit (11) durch eine Flüssigkeitsverbindungsleitung (13) und eine Gasverbindungsleitung (14) parallel verbunden sind, um einen Kältemittelkreislauf (15) zu bilden, durch den ein Kältemittel zirkuliert; und
eine Steuerung (80), wobei jeder Expansionsventilkreislaufabschnitt (52) Folgendes einschließt:
ein temperaturempfindliches nutzungsseitiges Expansionsventil (53);
eine Hauptleitung (60), die den Strom des Kältemittels zwischen dem nutzungsseitigen Wärmetauscher (51) und der Flüssigkeitsverbindungsleitung (13) über das nutzungsseitige Expansionsventil (53) ermöglicht;
eine Bypass-Leitung (70), die es dem Kältemittel ermöglicht, die Hauptleitung (60) zu umgehen und zwischen dem nutzungsseitigen Wärmetauscher (51) und der Flüssigkeitsverbindungsleitung (13) zu fließen;
einen Schaltungsmechanismus (54), der sowohl die Hauptleitung (60) als auch die Bypass-Leitung (70) zwischen einem offenen Zustand und einem geschlossenen Zustand schaltet;
die Steuerung (80) konfiguriert ist, um den Schaltungsmechanismus (54) derart zu steuern, dass, wenn ein Abtauvorgang gestartet wird, bei dem das Kältemittel durch den Kältemittelkreislauf (15) zirkuliert, um die nutzungsseitigen Wärmetauscher (51) der nutzungsseitigen Einheiten (12) dazu zu veranlassen, als Kondensatoren zu arbeiten, und den wärmequellenseitigen Wärmetauscher (23) dazu zu veranlassen, als Verdampfer zu arbeiten, die Hauptleitung (60) geschlossen wird und die Bypass-Leitung (70) in jeder der Vielzahl von nutzungsseitigen Einheiten (12) geöffnet wird;
wobei die Steuerung (80) konfiguriert ist, um den Schaltungsmechanismus (54) derart zu steuern, dass, wenn der Abtauvorgang gestartet wird und der nutzungsseitige Wärmetauscher (51) irgendeiner der nutzungsseitigen Einheiten (12) vollständig abgetaut ist, die Bypass-Leitung (70) der nutzungsseitigen Einheit (12) mit dem abgetauten nutzungsseitigen Wärmetauscher (51) von einem offenen Zustand in einen geschlossenen Zustand schaltet.

2. Kühleinrichtung nach Anspruch 1, wobei
der Schaltungsmechanismus (54) ein zwischen einem offenen Zustand und einem geschlossenen Zustand umschaltbares Bypass-Ein/Aus-Ventil (71) einschließt, wobei das Bypass-Ein/Aus-Ventil (71) für die Bypass-Leitung (70) bereitgestellt ist.

3. Kühleinrichtung nach Anspruch 2, wobei
der Schaltungsmechanismus (54) weiter ein für die Bypass-Leitung (70) bereitgestelltes Bypass-Rückschlagventil (72) einschließt, wobei das Bypass-Rückschlagventil (72) dem Kältemittel ermöglicht, nur von dem nutzungsseitigen Wärmetauscher (51) zu der Flüssigkeitsverbindungsleitung (13) zu fließen.

4. Kühleinrichtung nach einem der Ansprüche 1 bis 3, wobei
der Schaltungsmechanismus (54) ein zwischen einem offenen Zustand und einem geschlossenen Zustand umschaltbares nutzungsseitiges Ein/Aus-Ventil (61) einschließt, wobei das nutzungsseitige Ein/Aus-Ventil (61) für die Hauptleitung (60) bereitgestellt ist.

5. Kühleinrichtung nach Anspruch 4, wobei
der Schaltungsmechanismus (54) ein nutzungsseitiges Rückschlagventil (62) einschließt, das für die Hauptleitung (60) bereitgestellt ist, wobei das nutzungsseitige Rückschlagventil (62) dem Kältemittel ermöglicht, nur von der Flüssigkeitsverbindungsleitung (13) zum nutzungsseitigen Wärmetauscher (51) zu fließen.

6. Kühleinrichtung nach einem der Ansprüche 1 bis 3, wobei
die nutzungsseitigen Einheiten (12) jeweils eine nutzungsseitige Gaskältemittelleitung (57) einschließen, durch die ein Gasende des nutzungsseitigen Wärmetauschers (51) mit der Gasverbindungsleitung (14) verbunden ist,
das nutzungsseitige Expansionsventil (53) einen temperatursensitiven Zylinder (53a), der an der nutzungsseitigen Gaskältemittelleitung (57) angebracht ist, und einen Ausgleicher (53b) einschließt, und
der Schaltungsmechanismus (54) umschaltbar ist zwischen einem ersten Verbindungszustand, in dem der Ausgleicher (53b) des nutzungsseitigen Expansionsventils (53) mit einem Zwischenabschnitt der nutzungsseitigen Gaskältemittelleitung (57) verbunden ist, und einem zweiten Verbindungszustand, in dem der Ausgleicher (53b) des nutzungsseitigen Expansionsventils (53) mit einem Zwischenabschnitt der Hauptleitung (60) zwischen dem nutzungsseitigen Expansionsventil (53) und der Flüssigkeitsverbindungsleitung (13) verbunden ist.

7. Kühleinrichtung nach Anspruch 6, wobei
der Schaltungsmechanismus (54) ein nutzungsseitiges Rückschlagventil (62) einschließt, das für die Hauptleitung (60) bereitgestellt ist, wobei das nutzungsseitige Rückschlagventil (62) dem Kältemittel ermöglicht, nur von der Flüssigkeitsverbindungsleitung (13) zum nutzungsseitigen Wärmetauscher (51) zu fließen.

8. Kühleinrichtung nach Anspruch 1, wobei
die Steuerung (80) konfiguriert ist, den Schaltungsmechanismus (54) derart zu steuern, dass die Bypass-Leitung (70) einer der nutzungsseitigen Einheiten (12) mit dem noch nicht vollständig abgetauten nutzungsseitigen Wärmetauscher (51) im offenen Zustand gehalten wird, und derart, dass die Bypass-Leitung (70) der anderen nutzungsseitigen Einheit(en) mit dem abgetauten nutzungsseitigen Wärmetauscher (51) intermittierend geöffnet wird.

## Revendications

1. Appareil de réfrigération comprenant :
une unité côté source de chaleur (11) incluant un échangeur de chaleur côté source de chaleur (23) ;
une pluralité d'unités côté utilisation (12) incluant chacune un échangeur de chaleur côté utilisation (51) et une portion de circuit de soupape de détente (52), les unités côté utilisation (12) étant reliées en parallèle à l'unité côté source de chaleur (11) à travers un tuyau d'interconnexion à liquide (13) et un tuyau d'interconnexion à gaz (14) pour former un circuit de réfrigérant (15) faisant circuler un réfrigérant à travers celui-ci ; et
un dispositif de commande (80), dans lequel chacune de la portion de circuit de soupape de détente (52) inclut :
une soupape de détente côté utilisation sensible à la température (53) ;
un tuyau principal (60) permettant au réfrigérant de s'écouler entre l'échangeur de chaleur côté utilisation (51) et le tuyau d'interconnexion à liquide (13) via la soupape de détente côté utilisation (53) ;
un tuyau de dérivation (70) permettant au réfrigérant de dériver le tuyau principal (60) et s'écouler entre l'échangeur de chaleur côté utilisation (51) et le tuyau d'interconnexion à liquide (13) ;
un mécanisme de commutation (54) commutant chacun du tuyau principal (60) et du tuyau de dérivation (70) entre un état ouvert et un état fermé ;
le dispositif de commande (80) est configuré pour commander le mécanisme de commutation (54) de sorte que si une opération de dégivrage, dans laquelle le réfrigérant circule à travers le circuit de réfrigérant (15) pour amener les échangeurs de chaleur côté utilisation (51) des unités côté utilisation (12) à fonctionner comme condenseurs et amener l'échangeur de chaleur côté source de chaleur (23) à fonctionner comme un évaporateur, est lancée, le tuyau principal (60) est fermé, et le tuyau de dérivation (70) est ouvert dans chacune de la pluralité d'unités côté utilisation (12) ;
dans lequel le dispositif de commande (80) est configuré pour commander le mécanisme de commutation (54) de sorte que si l'opération de dégivrage est lancée et l'échangeur de chaleur côté utilisation (51) de l'une quelconque des unités côté utilisation (12) est complètement dégivré, le tuyau de dérivation (70) de l'unité côté utilisation (12) présentant l'échangeur de chaleur côté utilisation (51) dégivré commute d'un état ouvert à un état fermé.

2. Appareil de réfrigération selon la revendication 1, dans lequel
le mécanisme de commutation (54) inclut une soupape de marche-arrêt de dérivation (71) commutable entre un état ouvert et un état fermé, la soupape de marche-arrêt de dérivation (71) étant prévue pour le tuyau de dérivation (70).

3. Appareil de réfrigération selon la revendication 2, dans lequel
le mécanisme de commutation (54) inclut en outre un clapet antiretour de dérivation (72) prévu pour le tuyau de dérivation (70), le clapet antiretour de dérivation (72) permettant au réfrigérant de s'écouler seulement de l'échangeur de chaleur côté utilisation (51) au tuyau d'interconnexion à liquide (13).

4. Appareil de réfrigération selon l'une quelconque des revendications 1 à 3, dans lequel
le mécanisme de commutation (54) inclut une soupape de marche-arrêt côté utilisation (61) commutable entre un état ouvert et un état fermé, la soupape de marche-arrêt côté utilisation (61) étant prévue pour le tuyau principal (60).

5. Appareil de réfrigération selon la revendication 4, dans lequel
le mécanisme de commutation (54) inclut un clapet antiretour côté utilisation (62) prévu pour le tuyau principal (60), le clapet antiretour côté utilisation (62) permettant au réfrigérant de s'écouler seulement du tuyau d'interconnexion à liquide (13) à l'échangeur de chaleur côté utilisation (51).

6. Appareil de réfrigération selon l'une quelconque des revendications 1 à 3, dans lequel
les unités côté utilisation (12) incluent chacune un tube de réfrigérant à gaz côté utilisation (57), à travers lequel une extrémité de gaz de l'échangeur de chaleur côté utilisation (51) est reliée au tuyau d'interconnexion à gaz (14),
la soupape de détente côté utilisation (53) inclut un cylindre sensible à la température (53a) attaché au tube de réfrigérant à gaz (57) côté utilisation, et un égaliseur (53b), et
le mécanisme de commutation (54) est commutable entre un premier état de connexion où l'égaliseur (53b) de la soupape de détente côté utilisation (53) est relié à une portion intermédiaire du tube de réfrigérant à gaz côté utilisation (57) et un second état de connexion où l'égaliseur (53b) de la soupape de détente côté utilisation (53) est relié à une portion intermédiaire du tuyau principal (60) entre la soupape de détente côté utilisation (53) et le tuyau d'interconnexion à liquide (13).

7. Appareil de réfrigération selon la revendication 6, dans lequel
le mécanisme de commutation (54) inclut un clapet antiretour côté utilisation (62) prévu pour le tuyau principal (60), le clapet antiretour côté utilisation (62) permettant au réfrigérant de s'écouler seulement du tuyau d'interconnexion à liquide (13) à l'échangeur de chaleur côté utilisation (51).

8. Appareil de réfrigération selon la revendication 1, dans lequel
le dispositif de commande (80) est configuré pour commander le mécanisme de commutation (54) de sorte que le tuyau de dérivation (70) d'une des unités côté utilisation (12) présentant l'échangeur de chaleur côté utilisation (51) qui n'a pas été complètement dégivré encore soit maintenu dans l'état ouvert, et de sorte que le tuyau de dérivation (70) de(s) autre(s) unité(s) côté utilisation présentant l'échangeur de chaleur côté utilisation (51) dégivré soit ouvert par intermittence.
